(19) **Europäisches Patentamt / European Patent Office / Office européen des brevets**

(11) **EP 2 378 688 B1**

(12) **EUROPEAN PATENT SPECIFICATION**

(45) Date of publication and mention
of the grant of the patent:
**23.01.2013 Bulletin 2013/04**

(51) Int Cl.:
*H04L 25/02* (2006.01)   *H04B 7/02* (2006.01)
*H04L 5/00* (2006.01)   *H04B 7/06* (2006.01)

(21) Application number: **10305393.0**

(22) Date of filing: **16.04.2010**

(54) **Method for resource allocation in a radio communication system**

Verfahren zur Ressourcenzuweisung in einem Funkkommunikationssystem

Procédé d'affectation de ressources dans un système de communication radio

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**19.10.2011 Bulletin 2011/42**

(73) Proprietor: **Alcatel Lucent
75007 Paris (FR)**

(72) Inventors:
• **Jung, Peter
13158 Berlin (DE)**
• **Schreck, Jan
10967 Berlin (DE)**
• **Wunder, Gerhard
10247 Berlin (DE)**

(74) Representative: **Wetzel, Emmanuelle et al
Alcatel-Lucent Deutschland AG
Intellectual Property & Corporate Standards
Lorenzstrasse 10
70435 Stuttgart (DE)**

(56) References cited:
**US-A1- 2008 013 610**   **US-A1- 2010 027 456**

• ALCATEL-LUCENT ET AL: "Estimation of extended PMI feedback signalling required for user intra-cell and inter-cell coordination" 3GPP DRAFT; R1-100419_ESTIM_PMI_FDBCK_SIG_USER_PCOOR5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418069 [retrieved on 2010-01-12]
• ERICSSON: "A discussion on some technology components for LTE-Advanced" _SIG_USER_PCOOR5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. R1-082024, 5 May 2008 (2008-05-05), pages 1-11, XP002541666
• BONNET J ET AL: "Closed-loop modes for two high-rate linear space-time block codes" COMMUNICATIONS, 2005. ICC 2005. 2005 IEEE INTERNATIONAL CONFERENCE ON SEOUL, KOREA 16-20 MAY 2005, PISCATAWAY, NJ, USA, IEEE LNKD- DOI:10.1109/ICC.2005.1494415, vol. 1, 16 May 2005 (2005-05-16), pages 568-572, XP010825356 ISBN: 978-0-7803-8938-0

## Description

### FIELD OF THE INVENTION

The invention relates to wireless communications and, more particularly but not exclusively, to channel feedback reporting and radio resource allocation in wireless communications.

### BACKGROUND

Multiple antenna downlink technology offers a possibility of sharing a same frequency band at a same time between multiple users. Existing techniques such as nonlinear dirty paper coding, linear beamforming technique (adaptive or fixed beamforming) or limited feedback multiuser MIMO provide at least one of the following disadvantages: difficulties in implementation, necessity to provide dedicated pilots in addition to common pilots to provide the users with a proper phase reference, necessity of large amount of feedback information in uplink direction to provide accurate information of a downlink transmission channel.

A limited feedback scheme for downlinks of a multiuser MIMO OFDM system based on fixed linear beamforming, i.e. linear beamforming vectors are chosen from a fixed transmit codebook, has been proposed by allowing a base station of a specific antenna system to uniformly approximate all multiuser data rates for any selection of users and any combination of beamforming vectors defined by a transmit codebook for the specific antenna system and thereby providing all degrees of freedom for a pre-coding vector selection for users of the multiuser MIMO OFDM system. An approximation of the multiuser data rates is enabled by using a feedback codebook for the specific antenna system with predefined test channels as an additional codebook. One of the predefined test channels is determined at a mobile station and is indicated from the mobile station to the base station of the specific antenna system, which minimizes a certain metric. US 2010/0027456 A1 discloses a coordinated multipoint transmitter for use with a network MIMO super-cell and a coordination unit configured to provide joint link processing to coordinate a multipoint transmission corresponding to a set of transmission points. A UE may report a set of feedback parameters to the super-cell and the feedback parameters may include a channel quality indicator (CQI), a preceding matrix indicator (PMI) and a rank indicator (RI).

Alcatel-Lucent et al. "Estimation of extended PMI feedback signaling required for user intra-cell and inter-cell coordination"; 3GPP TSG-RAN WG1 Meeting #59bis, R1-100419 discloses an estimation for the feedback amount to realize PMI-feedback for intra-cell multi-user MIMO and inter-cell coordinated scheduling with respect to different antenna correlation scenarios and different mobility scenarios.

US 2008/0013610 A1 discloses a CQI feedback method for MIMO deployments. A receiver includes a receive portion employing transmission signals from a transmitter, having multiple transmit antennas, that is capable of transmitting at least one spatial codeword and adapting a transmission rank. The receiver also includes a feedback generator portion configured to provide a channel quality indicator that is feedback to the transmitter, wherein the channel quality indicator corresponds to at least one transmission rank.

Ericsson "A discussion on some technology components for LTE-Advanced"; 3GPP TSG-RAN WG1 Meeting #53, R1-082024 discloses three different approaches for coordinated downlink transmission/scheduling and UE-to-network reporting.

### SUMMARY

The way of reporting feedback information in a situation of multiple antenna systems of a radio communication system effects selection of feedback information at a mobile station, effects reporting of feedback information from the mobile station to a base station and effects information handling and a selection mechanism for radio resources at the base station.

Therefore, it is an object of the invention to improve an overall data throughput of a radio communication system comprising multiple antenna systems by using an adequate selection algorithm at the mobile station, by using adequate feedback information and by using an adequate information handling and selection mechanism at the base station.

The object is achieved by a method for resource allocation in a radio communication system, wherein the method comprises the steps of measuring at a mobile station first radio signals of a first transmission channel between a first antenna system of a base station of the radio communication system and the mobile station and at least second radio signals of at least one second transmission channel between at least one second antenna system of the base station or of a further base station of the radio communication system and the mobile station, selecting at the mobile station a predefined transmission channel description approximating the first transmission channel and approximating an interference component of the at least second transmission channel, and selecting at the base station of the first antenna system a radio resource for the mobile station based on an indication of the predefined transmission channel description reported by the mobile station.

The predefined transmission channel description may be a predefined channel vector or a predefined channel matrix depending on a number of antenna elements used at the first antenna system, at the at least second antenna system, and at an antenna system of the mobile station.

The object is further achieved by a mobile station for use in a radio communication system.

The method according to the present invention offers a first benefit of taking into account an interference part resulting from the second transmission channel for an adequate resource allocation at the base station for the first transmission channel depending on interference levels at locations of the mobile stations.

The method offers a second benefit of avoiding signalling a full characterizing description of the second transmission channel from the mobile station to the base station and/or the further base station with a large signalling overhead.

The method offers a third benefit of avoiding an indication of two predefined transmission channel descriptions for the first and the second transmission channel. One indication of a predefined transmission channel description approximating a superposition of both the first and the second transmission channel is sufficient for the feedback information.

The method offers a fourth benefit of avoiding a forwarding of an indication from the further base station to the base station, if the mobile station would feedback the indication of the predefined transmission channel description for the second transmission channel to the further base station.

Furthermore, the invention does not need necessarily coordination or cooperation between the base stations to achieve an adequate performance in a strongly interference limited multi-cell environment with overlapping radio cells.

According to a first group of embodiments of the invention, the method further comprises the step of transmitting interferer information to the mobile station indicating the at least one second antenna system as an interferer or determining at the mobile station the at least one second antenna system as the interferer.

This provides a possibility for the mobile station, how to handle the existence of the second transmission channel especially in a radio communication system providing coordinated multipoint transmission and/or reception schemes (CoMP = coordinated multipoint). The mobile station might not know in advance, if the second antenna system coordinates or doesn't coordinate with the first antenna system. If the second antenna system will coordinate with the first antenna system for transmitting data to the mobile station, an indication for a predefined transmission channel description approximating the first transmission channel and approximating at same time the second transmission channel as an interferer will not be appropriate.

In a further embodiment of the invention, the method further comprises the step of determining at the mobile station the interference component as a relation of an interference resulting from the at least second radio signals of the at least second antenna system being not a member of a cooperation group of antenna systems comprising the first antenna system to an overall interference resulting from cooperative radio signals of the cooperation group and from the at least second radio signals.

The further embodiment of the invention allow identifying and indicating only those radio signals as interfering radio signals transmitted from an antenna system being not a member of the cooperation group of antenna systems.

According to a second group of embodiments of the invention, the determining step is based on interference information about either of the following: an average number of at least one further mobile station scheduled at the at least second antenna system, a degree of cooperation of the at least second antenna system outside the cooperation group, a degree of overlap of cooperation groups for the at least one further mobile station, and/or a size of a set of antenna weight assignments for the at least one further mobile station.

The second group of embodiment provides different possibilities for a more accurate determination of the interference component by using one or several of the above parameters as one or several input parameter(s) for the determining step.

According to further preferred embodiments of the invention, the method further comprises the step of transmitting the interference information to the mobile station and/or estimating the interference information at the mobile station. This allows two ways to provide the interference information to the mobile station. A first part of interference information may be transmitted from the base station to the mobile station and a second part of the interference information may be estimated by the mobile station itself.

In preferred embodiments of the invention, the method further comprises the steps of measuring at the mobile station at least third radio signals of at least one third transmission channel between at least one third antenna system of the base station, of the further base station, or of an even further base station of the radio communication system and the mobile station, providing cooperation information indicating the at least one third antenna system as a member or not as a member of the cooperation group of antenna systems to the mobile station or determining at the mobile station the at least one third antenna system as the member or not as the member of the cooperation group, and wherein the selecting step at the mobile station for the predefined transmission channel description includes a further interference component for the at least third transmission channel or considers the at least third radio signals as a part of the cooperative radio signals.

The preferred embodiments of the invention provide an advantage, that the mobile station may classify at least three different radio signals from at least three different antenna systems by a cooperative radio signal classifier or by an interference radio signal classifier. Depending on the classification, the mobile station is able to determine and select a predefined transmission channel description approximating an interference situation of the at least three different radio signals at a current location of the mobile station.

If the mobile station reports indications for several or all transmission channels of the cooperation group to one base station or to several base stations assigned to the transmission channels, interference within the cooperation group can be reduced and the overall data rate for the base stations of the cooperation group can be increased.

In further preferred embodiments of the invention, if the providing step or the determining step provides or determines the at least one third antenna system as the member of the cooperation group, the method further comprises the steps of transmitting from the base station to the further base station or the even further base station scheduling information indicating a scheduling of data for the mobile station, if the first antenna system and the at least third antenna system belong to different base stations, and selecting at the base station, at the further base station or at the even further base station of the at least third antenna system a radio resource for an even further mobile station based on the scheduling information.

The further preferred embodiments of the invention provide a benefit of further reducing inter-sector or inter-cell interference and of further increasing an overall data throughput based on a cooperation between at least two antenna systems belonging to a same cooperation group for scheduling mobile stations.

In even further preferred embodiments of the invention, if the providing step or the determining step provides or determines the at least one third antenna system as the member of the cooperation group, the method further comprises the steps of selecting at the mobile station at least one further predefined transmission channel description approximating the at least third transmission channel and the interference component of the at least second transmission channel, providing a further indication of the at least one further predefined transmission channel description to the base station, to the further base station or the even further base station of the at least third antenna system, or providing the further indication of the at least one further predefined transmission channel description to the base station of the first antenna system and forwarding the further indication from the base station to the further base station or the even further base station of the at least one third antenna system.

The even further preferred embodiments of the invention provide a first benefit of providing simultaneously or successive indications of predefined transmission channel descriptions to a base station or to several base stations, whose antenna systems belong to a same cooperation group and whose radio signals can be received at a current location of the mobile station, so that two or more base stations of the cooperation group are able to select a radio resource for the base station. The even further preferred embodiments offer two possibilities for providing the further indication to a base station of the at least third antenna system.

According to further embodiments of the invention, the mobile station, the base station of the first antenna system, and a base station of the at least second antenna system comprise a feedback codebook with same or different sets of predefined transmission channel descriptions for the first and the at least second transmission channel.

This provides the advantage of adapting the predefined transmission channel descriptions depending on a similar or divergent landscape around a location of the antenna systems such as urban, rural or indoor.

In an even further embodiment of the invention, the predefined transmission channel description is a predefined normalized transmission channel description, wherein the method further comprises the step of calculating at the mobile station an adaptation factor between the predefined normalized transmission channel description and the first transmission channel with the interference component of the at least second transmission channel, wherein the indication indicates the predefined normalized transmission channel description and wherein a feedback information from the mobile station further comprises the adaptation factor. This allows limiting the number of predefined transmission channel descriptions in the radio communication system especially in case of different power levels by using the adaptation parameter.

The object of the invention is further achieved by a base station for use in a radio communication system, the base station comprises an antenna system for transmitting radio signals via a first transmission channel, a feedback codebook with at least two predefined transmission channel descriptions, means for providing interferer information indicating at least one second antenna system as an interferer for a mobile station, and means for selecting a radio resource for the mobile station based on an indication of the mobile station for one of the predefined transmission channel descriptions approximating the first transmission channel and an interference component of at least one second transmission channel between the interferer and the mobile station.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows a block diagram of a radio communication network in accordance to the embodiments of the invention.

Figure 2 shows a block diagram of two base stations and two mobile stations with line of sight channels.

Figure 3 shows a flow diagram of a method in accordance to an embodiment of the invention.

Figure 4 shows a flow diagram of a further method in accordance to a further embodiment of the invention.

Figure 5 shows a block diagram of a base station according to the embodiments of the invention.

Figure 6 shows a block diagram of a mobile station according to the embodiments of the invention.

## DESCRIPTION OF THE EMBODIMENTS

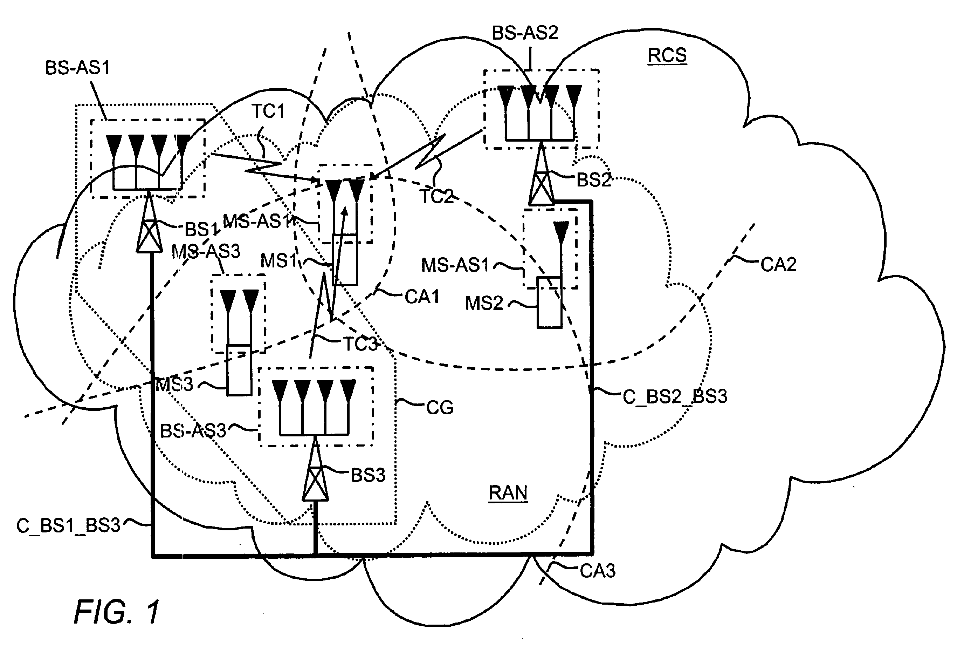

Figure 1 shows a radio communication system RCS comprising a radio access network RAN. The core network of the radio communication system RCS and connections of the radio communication system RCS to further radio communication systems, to the Internet or to fixed line communications systems is not shown for simplification.

The radio communication system RCS may be for example a 3GPP LTE radio communication network (3GPP = Third Generation Partnership Project, LTE = long term evolution) using OFDM (OFDM = Orthogonal Frequency Division Multiplexing). In further alternatives, the radio communication system RCS may for example a 3GPP UMTS radio communication network (UMTS = Universal Mobile Telecommunication Systems), a WiMAX OFDM radio communication network (WiMAX = Worldwide Interoperability for Microwave Access) based on the IEEE 802.16d standard (IEEE = Institute of Electrical and Electronics Engineers), or a WLAN (WLAN) using OFDM based on the IEEE 802.11 g standard. The radio access network RAN comprises a first base station BS1, a second base station BS2, and a third base station BS3. In further alternatives, the radio access network RAN may comprise one base station, two base stations or more than three base stations.

The first base station BS1 comprises a first antenna system BS-AS1 for a first wireless coverage area CA1. The second base station BS2 comprises a second antenna system BS-AS2 for a second wireless coverage area CA2. The third base station BS3 comprises a third antenna system BS-AS3 for a third wireless coverage area CA3.

In further alternatives, the first base station BS1 may comprise the first antenna system BS-AS1 for a first radio cell or a first radio sector, the second antenna system BS-AS2 for a second radio cell or a second radio sector, and the third antenna system BS-AS3 for a third radio cell or a third radio sector or the first base station BS1 may comprise the first antenna systems BS-AS1 for the first radio cell or the first radio sector and the second antenna system BS-AS2 or the third antenna system BS-AS3 for a further radio cell or a further radio sector.

The first base station BS1 may be connected to the third base station BS3 via a first connection C_BS1_BS3. The second base station BS2 may be connected to the third base station BS3 via a second connection C_BS2_BS3. Further connections within the radio access network RAN are not shown for simplification.

The first connection C_BS1_BS3 and the second connection C_BS2_BS3 may be for example X2 connections such as used in LTE and may be based for example on wired connections or microwave connections.

A first mobile station MS1 may be located in an overlapping area of the wireless coverage areas CA1, CA2, CA3 of the base stations BS1, BS2, BS3 and may comprise a fourth antenna system MS-AS1 with two antenna elements. A second mobile station MS2 may be located in an overlapping area of the second and third wireless coverage areas CA2 and CA3 of the second and third base stations BS2 and BS3 and may comprise a fifth antenna system MS-AS2 with one antenna element.

A third mobile station MS3 may be located in an overlapping area of the first and third wireless coverage areas CA1 and CA3 of the first and third base stations BS1 and BS3 and may comprise a sixth antenna system MS-AS3 with two antenna elements. Further mobile stations are not shown for simplification.

The mobile stations MS1, MS2, MS3 may be for example cellular telephones, portable computers, pocket computers, hand-held computers, personal digital assistants or car-mounted mobile devices.

The base stations BS1, BS2, BS3 transmit reference signals such as pilots for example by an OFDMA transmission technique to the mobile stations MS1, MS2, MS3. Alternatively other transmission techniques like e.g. TDMA can be used.

The reference signals, which are received at the mobile stations MS1, MS2, MS3, have travelled different transmission paths between the base stations BS1, BS2, BS3 and the mobile stations MS1, MS2, MS3 depending on locations of the antenna systems BS-AS1, BS-AS2, BS-AS3 of the base stations BS1, BS2, BS3 and depending on locations of the mobile stations MS1, MS2, MS3.

For example, several transmission paths caused by reflections and/or scattering between the first base station BS1 and the first mobile station MS1 add up to the first transmission channel TC1. In a same way, several transmission paths between the second base station BS2 and the first mobile station MS1 add up to a second transmission channel TC2 and several transmission paths between the third base station BS3 and the first mobile station MS1 add up to a third transmission channel TC3. Transmission channels from the first, second and third antenna system BS-AS1, BS-AS2, BS-AS3 to the second mobile station MS2 and the third mobile station MS3 are not shown for simplification.

The base stations B51, BS2, BS3 and the mobile stations MS1, MS2, MS3 each comprise a feedback codebook with two or more predefined transmission channel descriptions.

One of the predefined transmission channel descriptions can be used as an approximation of one of the transmission channels TC1, TC2, TC3 and as an approximation of one or several interference components of one or several other of the transmission channels TC1, TC2, TC3.

The predefined transmission channel descriptions may be for example predefined channel vectors or predefined channel matrices depending on a number of antenna elements used at the base station antenna systems BS-AS1, BS-AS2, BS-AS3 and depending on a further number of antenna elements used at the mobile station antenna systems MS-AS1, MS-AS2, MS-AS3.

The sets of predefined transmission channel descriptions of the feedback codebook of the base stations BS1, BS2, BS3 may be identical or may be different dependent on a landscape between the base stations BS1, BS2, BS3 and the mobile stations MS1, MS2, MS3. Typically landscapes are for example rural, urban or indoor. A mobile station being scheduled by a base station and the base station comprise a same feedback codebook. If the sets are identical, then the feedback codebook used at the mobile stations MS1, MS2, MS3 for one of the transmission channels TC1, TC2, TC3 can be reused for another one of the transmission channels TC1, TC2, TC3. If the sets are different, then the feedback codebook at the mobile stations MS1, MS2, MS3 may need to be updated, if the mobile stations MS1, MS2, MS3 move into a coverage area of a base station, whose predefined transmission channel descriptions have not been used recently. The feedback codebook can be designed for arbitrary environments using the LBG algorithm (LBG = algorithm proposed by Y. Linde, A. Buzo and R. Gray: "An algorithm for vector quantizer design", IEEE Transactions on Communications, vol. 28, no.1, pp. 84-95, Jan. 1980), which is an extension of the generalized Lloyd algorithm (S. P. Lloyd, "Least squares quantization in PCM," presented at the Institute of Mathematical Statistics Meeting Atlantic City New Jersey September 1957 and published in March 1982 Special Issue on Quantization of the IEEE Transaction on Information Theory, 1957.).

The predefined transmission channel descriptions may be based for example on LOS channels (LOS = line of sight) with equidistant angles of departure. An nth component of $V_i \in V_{\text{LOS}}$ may be defined as:

$$\left(\boldsymbol{\nu}_i\right)_n = \frac{1}{\sqrt{N}} e^{-j\frac{2\pi}{\lambda}\delta_n \sin(\theta_i)}$$

where:

- $\delta_n$ is a position at an antenna system for the nth antenna element,
- $\lambda$ is a wavelength of a radio signal.

Angles of departure of the LOS channels according to a predefined direction may be chosen to be for example

$$\theta = [-60°, -43°, -26°, -8.5°, 8.5°, 26°, 43°, 60°].$$

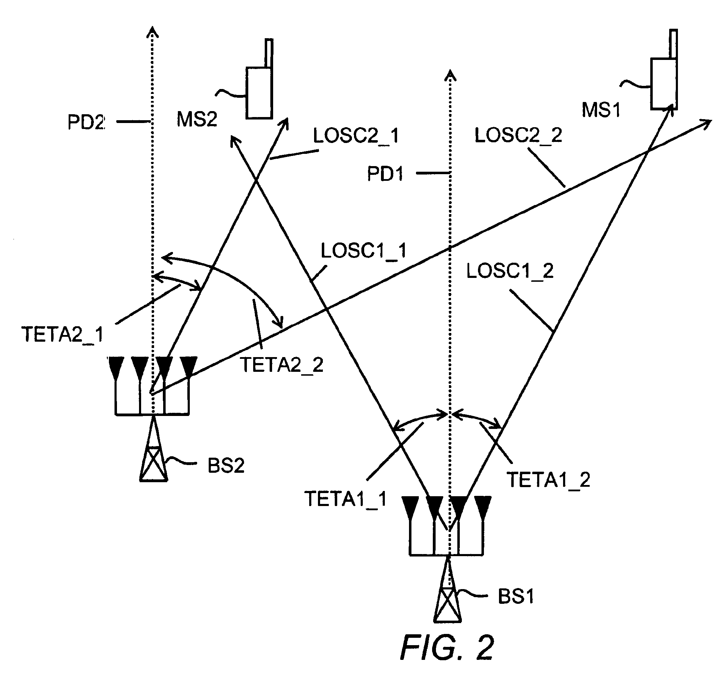

Figure 2 shows exemplarily the first base station BS1, the second base station BS2, the first mobile station MS1 and the second mobile station MS2.

Two LOS channels LOSC1_1, LOSC1_2 of the first base station BS1 are directed with angles of departure TETA1_1, TETA1_2 according to a first predefined direction PD1.

Two further LOS channels LOS2_1, LOSC2_2 of the second base station BS2 are directed with angles of departure TETA2_1, TETA2_2 according to a second predefined direction PD2 which is preferably parallel to the first predefined direction PD1 as shown in Figure 2.

The first mobile station MS1 is located near an intersection point of the LOS channels LOS1_1, LOSC2_1 and the second mobile station MS2 is located near a further intersection point of the LOS channels LOSC1_2, LOSC2_2.

The predefined transmission channel descriptions used for communication of mobile stations MS1, MS2 with the first base station BS1 may be for example predefined channel matrices with a larger component based on the LOS channels LOSC1_1, LOS1_2 of the first base station BS1 and with a smaller component based on the LOS channels LOS2_1, LOSC2_2 of the second base station BS2.

The predefined transmission channel descriptions used for communication of mobile stations MS1, MS2 with the second base station BS2 may be for example predefined channel matrices with a larger component based on the LOS channels LOSC2_1, LOSC2_2 of the second base station BS2 and with a smaller component based on the LOS channels LOS1_1, LOSC1_2 of the first base station BS1.

The predefined transmission channel descriptions may be in an alternative averaged channel estimations obtained at a network element of the radio communication system RCS by measurements of the mobile stations MS1, MS2, MS3 over a longer time period and by reporting the measurements to the network element such as an operation and maintenance centre.

The base stations BS1, BS2, BS3 and the mobile stations MS1, MS2, MS3 each may further comprise a transmit codebook $C = \{c_1, c_2,...,c_{|c|}\}$ with two or more predefined pre-coding vectors $c_1$, $c_2$,...

The transmit codebooks used for the antenna systems BS-AS1, BS-AS2, BS-AS3 may be identical or may be different. A mobile station being scheduled by a base station and the base station comprise a same transmit codebook. The first base station BS1 and the second base station BS2 may belong to a coordination group CG. The third base station BS3 may belong to a further coordination group, which is not shown for simplification.

Mobile stations located within a coverage area of the coordination group CG preferably have knowledge of the transmit codebooks used by the antenna systems AS1, AS3 of the coordination group CG. Same or different transmit codebooks may be used at the antenna systems AS1, AS3 of the coordination group CG. Preferably, base stations BS1, BS3 of the antenna systems AS1, AS3 of the coordination group CG have knowledge not only of the transmit codebooks of their own antenna systems but also have knowledge of the transmit codebooks used by antenna systems of other base stations of the coordination group CG.

Base stations of the coordination group CG may transmit data to the mobile stations MS1, MS2, MS3 in a coordinated manner with a fixed sequence of base stations for the coordination.

By using forward coordination, the first base station BS1 of the fixed sequence performs a first scheduling decision and reports a result of the scheduling decision to a further base station of the fixed sequence such as the third base station BS3. The further base station of the fixed sequence performs a further scheduling decision by taking into account the first scheduling decision and not taking into account the further scheduling decision for mobile stations scheduled by the first base station of the fixed sequence and reports a result of the further scheduling decision to an even further base station of the fixed sequence. This goes on until the last base station of the fixed sequence is reached.

By using forward and backward coordination, the further base station of the fixed sequence also takes into account the further scheduling decision for mobile stations scheduled by the first base station of the fixed sequence in comparison to the forward coordination. The same applies for the following base stations of the fixed sequence.

In an alternative, the base stations of the coordination group CG may transmit data to the mobile stations MS1, MS2, MS3 in a jointly manner by transmitting same data at a same time from two or more base stations to one of the mobile stations MS1, MS2, MS3.

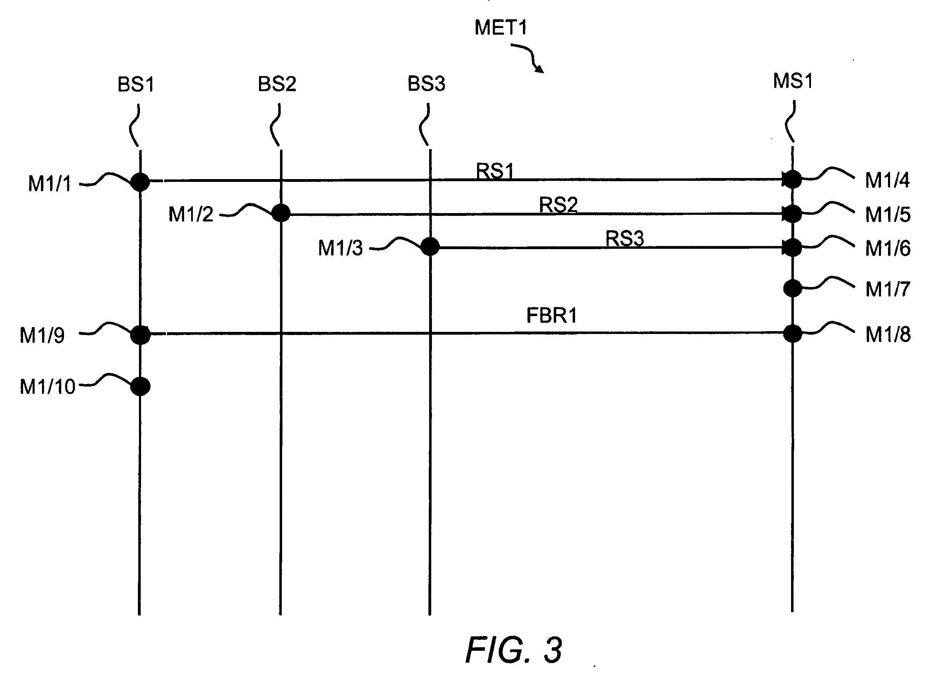

The reference signals of the first, the second, and the third transmission channel TC1, TC2, TC3 are measured at the first mobile station MS1. The first mobile station MS1 selects one or several predefined channel descriptions of a first feedback codebook approximating the first transmission channel TC1 and approximating an interference component of the second transmission channel TC2. Preferably, the first mobile station MS1 may additionally select one or several predefined channel descriptions of the first or a further feedback codebook approximating the third transmission channel TC3 and approximating an interference component of the second transmission channel TC2. The selection of the predefined transmission channel descriptions is explained in more detail by the method described according to Figure 3.

The mobile station MS1 transmits one or several indications of the selected predefined transmission channel descriptions of the first feedback codebook in a feedback report to the first base station BS1 and preferably transmits one or several further indications of the selected predefined transmission channel descriptions of the further feedback codebook in a further feedback report to the third base station BS3.

The first base station BS1 may select a radio resource such as a specific pre-coding vector for a specific time frame for the first mobile station MS1 based on the one or several indications of the selected predefined transmission channel descriptions of the first feedback codebook reported by the first mobile station MS1. In an alternative, the third base station BS3 may select a radio resource such as a specific pre-coding vector for a specific time frame for the first mobile station MS1 based on the one or several further indications of the selected predefined transmission channel descriptions of the second feedback codebook reported by the first mobile station MS1. In a further alternative, both the first and the third base station BS1, BS3 may select radio resources such as pre-coding vectors for a same time to transmit same data to the first mobile station MS1.

Referring to Figure 3 a flow diagram of a method MET1 in accordance to a first embodiment of the invention is shown. The number of the steps and sub-steps for performing the method MET1 is not critical, and as can be understood by those skilled in the art, that the number of the steps and sub-steps may vary without departing from the scope of the invention.

In first steps M1/1 M1/2, M1/3, the first base station BS1, the second base station BS2 and the third base station BS3 transmit first reference signals RS1, second reference signals RS2 and third reference signals RS3 for example periodically und unweighted, e.g. with a same amplitude, unvarying for antenna elements of the first, the second and the third antenna system AS1, AS2, AS3, e.g. with a constant amplitude, and orthogonal for antenna elements of each of the antenna systems AS1, AS2, AS3. The orthogonality of the reference signals RS1, RS2, RS3 can be achieved for example by using different codes or different frequencies or different transmission times on the antenna elements of the first, the second and the third antenna system AS1, AS2, AS3. Candidates for the reference signals RS1, RS2, RS3 are for example common pilots as being used in the OFDMA transmission technique for 3GPP LTE systems.

A following description of the method MET1 is given exemplarily for steps of the method MET1 performed at the first mobile station MS1, Similar steps are performed at the second and the third mobile station MS2, MS3.

In next steps M1/4, M1/5, M1/6, the first mobile station MS1 measures the reference signals RS1, RS2, RS3.

In a further step M1/7, the first mobile station MS1 may select one or several predefined transmission channel descriptions approximating the first transmission channel TC1 and approximating an interference component of the second transmission channel TC2.

In an alternative, the first mobile station MS1 further selects one or several predefined transmission channel descriptions approximating the third transmission channel TC3 and approximating an interference component of the second transmission channel TC2, which is not shown in Figure 3 for simplification.

In a further alternative, the first mobile station MS1 selects one or several predefined transmission channel descriptions approximating the first transmission channel TC1, approximating the interference component of the second transmission channel TC2, and approximating one or several interference components of one or several further transmission channels, which are not shown in Figure 1 for simplification.

The selection of the one or several predefined transmission channel descriptions may be performed on a granularity of a whole utilizable frequency range as a lower limit, of a resource block comprising a part of the whole utilizable frequency range, or of a frequency sub-carrier as an upper limit. The chosen granularity may be required by a system setup or may depend on a desired accuracy of capacity calculations in the first mobile station MS1 and the base stations BS1, BS2, BS3 and on a capacity of uplink channels for the feedback reports.

In the following, the predefined transmission channel description is selected on the granularity of a resource block, which comprises a set of sub-carriers as described above.

The selection of the predefined transmission channel description may be done in a following way:

In a first sub-step, the first mobile station MS1 calculates for a resource block an SINR value (SINR = signal-to-interference-and-noise-ratio) for different combinations of a subset of pre-coding vectors of the transmit codebook or for different combinations of all pre-coding vectors based on a knowledge of a transmission characteristic of the reference signals RS1, RS2, RS3 at the base stations BS1, BS2, BS3 and based on a knowledge of a reception characteristic of the reference signals RS1, RS2, RS3 at the first mobile station MS1.

A combination may be given for example by one pre-coding vector to be used for the first mobile station MS1 for scheduling data and no other pre-coding vector to be used for the mobile stations MS2, MS3. Or the combination is given by the pre-coding vector to be used for the first mobile station MS1 for scheduling data and at least a further pre-coding vector to be used for one of the mobile stations MS2, MS3. In the first case, there will be no interference by other pre-coding vectors. In the second case, the at least further pre-coding vector will generate interference to the pre-coding vector to be used for the first mobile station MS1.

Only a subset of pre-coding vectors may be used for the combinations, if for example a beam distance method is used in the radio communication system RCS. If only a subset of pre-coding vectors is used, then the subset must be known at the base stations BS1, BS2, BS3 and the mobile stations MS1, MS2, MS3. If the beam distance method is used, the beam distance criterion must be known additionally at the mobile stations MS1, MS2, MS3. The SINR of a superposition of the first, the second and the third transmission channel TC1, TC2, TC3 at the current location of the first mobile station MS1 can be written as:

$$\mathrm{SINR} = \frac{|\sum_b \langle u, H^b v_b \rangle|^2}{\sigma^2 + \sum_{\omega \in \Omega} |\sum_b \langle u, H^b \omega_b \rangle|^2} \quad (1)$$

where:

- $b$ is one of the base stations BS1, BS2, BS3 or $b$ is one of the antenna systems AS1, AS2, AS3 if for example two antenna systems belong to a same base station
- $H^b$ denotes a MIMO or MISO channel matrix for one of the transmission channels TC1, TC2, TC3

- *u* denotes a receive combiner (a receive beamforming vector) used at the first mobile station MS1
- $v_b$ is an antenna weight assignment (a transmit beamforming vector) used at the bth base station of the base stations BS1, BS2, BS3 for the first mobile station MS1
- $\omega := \{\omega_b\}_{b \in B} \in \Omega$ is a further antenna weight assignment (afurther transmit beamforming vector) of a set of antenna weight assignments $\Omega$ used at the base stations BS1, BS2, BS3 for the second or the third mobile station MS2, MS3
- $\sigma^2$ is a power of thermal noise

For an acceptable amount of feedback information and for avoiding a large amount of inter base station communication, interference contributions of the second transmission channel TC2 and the third transmission channel TC3 with respect to the first transmission channel TC1 may be split into an intra-cluster interference and an inter-cluster interference:

$$\sum_{\omega} | \sum_{b} \langle u, H^b \omega_b \rangle |^2 \leq I\Big(\sum_{\omega} | \sum_{b \in CG} \langle u, H^b \omega_b \rangle |^2\Big) + J\Big(\sum_{b \notin CG} \sum_{\omega} |\langle u, H^b \omega_b \rangle|^2\Big)$$

where:

- *I* is a function of the intra-cluster interference
- *J* is a function of the inter-cluster interference
- $b \in CG$ is a base station (or an antenna system) belonging to the coordination group CG
- $b \notin CG$ is a base station not belonging to the coordination group CG Intra-cluster interference means, that such kind of interference is caused by one or several base stations belonging to the coordination group CG of the first base station BS1 and the third base station B53.

Infer-cluster interference means, that such kind of interference is caused by one or several base stations not belonging to the coordination group CG such as the second base station BS2.

An upper bound of the inter-cluster interference function J given by a further inter-cluster interference function J', which is independent of the further transmit beamforming vectors $\omega_b$ and which depends on the MIMO or MISO channel matrices $H^b$ and on a total transit power $P_{max}$ by which a mobile station can be supported with a single beam, can be written as:

$$J\Big(\sum_{b \notin CG} \sum_{\omega} |\langle u, H^b \omega_b \rangle|^2\Big) \leq J'\Big(P_{max} \sum_{b \notin CG} s_{max}(H^b)^2\Big)$$

where:

- $P_{max}$ denotes a total transmit power of beams not belonging to the coordination group CG.
- $s_{max}(H^b)$ denotes a maximum singular value of the MIMO or MISO channel matrix $H^b$

In generic units $P_{max}$ can be written as $P_{max} = 1$, which is assumed in the following.

In a linear case, which means that the intra- and inter-cluster functions *I, J* and J' are assumed to be linear, the MIMO or MISO channel matrices $H^b$ can be replaced by effective MIMO or MISO channel matrices $\tilde{H}^b$ in a following way:

$$H^b \longrightarrow \tilde{H}^b := H^b / \sqrt{\sigma^2 + J'\left(\sum_{b' \notin CC} s_{\max}(H^{b'})^2\right)}$$

$$= H^b / \sqrt{\sigma^2 + \alpha \cdot \sum_{b' \notin CC} s_{\max}(H^{b'})^2}$$

where:

- $\alpha$ is an inter-cluster interference scaling factor

When using this normalization, a unit thermal noise power $\sigma^2 \to 1$ has to be used in SINR formulas like equation (1).

The inter-cluster interference scaling factor $\alpha$ accounts for the interference component of the inter-cluster interference and a value of the inter-cluster interference scaling factor $\alpha$ depends on the intra- and inter-cluster functions $I$, $J$ and $J'$ and may be determined at the first mobile station MS1 as a relation of the inter-cluster interference resulting from radio signals transmitted by the second antenna system AS2 being not a member of the cooperation group CG to an overall interference resulting from the intra-cluster interference and the inter-cluster interference.

The inter-cluster interference scaling factor $\alpha$ may be estimated for example by an average number of mobile stations scheduled at the second base station BS3 not belonging to the cooperation group CG.

In further alternatives, the inter-cluster interference scaling factor $\alpha$ may be estimated by a degree of cooperation of the second antenna system AS2 within the further cooperation group, by a degree of overlap of cooperation groups for the second and the third mobile station MS2, MS3, or by a size of a set of antenna weight assignments for the second and the third mobile station MS2, MS3. Such interference information may be transmitted for example from the first base station BS1 to the first mobile station MS1 or may be estimated at the first mobile station MS1.

The estimated average number of scheduled mobile stations may be for example a fixed value of 1.5, which results in the inter-cluster interference scaling factor to be $\alpha = 1/1.5$. In an alternative, $\alpha = 1$ may be an initial value during a warm up phase, which corresponds to a worst-case inter-cluster interference, when each of the mobile stations MS1, MS2, MS3 is scheduled by a different one of the antenna systems AS1, AS2, AS3. This means, that a single antenna system may use its entire transmit power for one of the mobile stations MS2, MS3 and the first mobile station MS1 may receive the entire transmit power as an interference component.

The first mobile station MS1 preferably needs to know, which of the antenna systems AS1, AS2, AS3 belong to the cooperation group CG and which of the antenna system AS1, AS2, AS3 don't belong to the cooperation group CG. Interferer information may be transmitted for example from the first base station BS1 to the first mobile station MS1 indicating the second antenna system AS2 of the second base station BS2 as an interferer not belonging to the same cooperation group CG as the first base station BS1. In an alternative, the first mobile station MS1 determines itself for example by monitoring an interference level of radio signals of the second antenna system AS2 and comparing the interference level with a second predefined threshold, that the second antenna system AS2 doesn't belong to the same cooperation group CG as the first antenna system AS1 of the first base station BS1. In a further alternative, the inter-cluster interference scaling factor $\alpha$ may be estimated from scheduling policies.

In an equivalent way, cooperation information may be transmitted for example from the first base station BS1 to the first mobile station MS1 indicating the third antenna system AS3 of the third base station BS3 as a member of the cooperation group CG. In an alternative, the first mobile station MS1 determines itself for example by monitoring an interference level of the third antenna system AS3 and comparing the interference level with the second predefined threshold, that the third antenna system AS3 belongs to the same cooperation group CG as the first antenna system AS1 of the first base station BS1.

Using the above assumptions, a lower bound on the SINR of equation (1) for a particular subcarrier can be derived as:

$$\text{SINR} \geq \frac{|\sum_b \langle u, \tilde{H}^b v_b \rangle|^2}{1 + \sum_{\omega \in \Omega} |\sum_{b \in \text{CC}} \langle u, \tilde{H}^b \omega_b \rangle|^2} \qquad (2)$$

In a further sub-step, the first mobile station MS1 calculates for the resource block a first utility value such as an average data rate

$$\bar{r} = \frac{1}{|\mathcal{F}|} \sum_{\tilde{H} \in \mathcal{F}} \log(1 + \text{SINR}(\tilde{H}))$$

where:

- $\tilde{H} = \{\tilde{H}^b : b \notin \text{CG}\}$ denotes a collection of effective channel matrices for transmission channels from the base stations to the first mobile station MS1, which are used in equation (2).

These computations may be based for example on the lower bounds in equation (2) on the SINR values SINR ($\tilde{H}$) per subcarrier for a set $F$ of effective channels collections for the different combinations of pre-coding vectors. The computations may not use all subcarriers of a resource block and/or the computations may use subcarriers outside a resource block (e.g. frequency locations of the reference signals RS1, RS2, RS3 may be different to frequency locations of the resource block).

Instead of log (1 + x) any other utility mapping such as for example MIESM (MIESM = mutual information effective SINR mapping) can be used, which is known for a person skilled in the art.

In an alternative, the calculation of the first utility value can be based on an SIR value (SIR = signal-to-interference-ratio). If no OFDMA transmission technique is used, in a further alternative for a transmission system with different parallel channels from a base station to a mobile station instead of the OFDM sub-carriers different time slots of a TDMA transmission technique can be used.

As an alternative, the utility values may include fairness values, which comprise overall data rates of the transmission channels TC1, TC2, TC3 and dedicated data rates of the mobile stations MS1, MS2, MS3 for a specific combination of pre-coding vectors and mobile stations.

In a further alternative, the utility values may be QoS values (QoS = quality of service), which comprise overall data rates of the transmission channels TC1, TC2, TC3 for a specific combination of pre-coding vectors and mobile stations, dedicated data rates of the mobile stations MS1, MS2, MS3 for the specific combination of pre-coding vectors and mobile stations and QoS parameters of services of the mobile stations MS1, MS2, MS3.

In a next sub-step, the first mobile station MS1 calculates for the same resource block and for the same combinations of pre-coding vectors further SINR values and second utility values based on a subset or based on all of the predefined transmission channel descriptions.

Only a subset of the predefined transmission channel descriptions may be used, if for example some of the predefined transmission channel descriptions may be seen by a pre-estimation to be improper for approximating the characteristic of a superposition of the first transmission channel TC1 and the second transmission channel TC2 or a superposition of the first transmission channel TC1, the second transmission channel TC2 and the third transmission channel TC3.

In an alternative, the first and the second sub-step are repeated for all predefined transmission channel descriptions known at the first mobile station MS1 and the first base station BS1.

The combinations of the subset of pre-coding vectors, which must be used at the first mobile station MS1 may be signalled from the first base station BS1 to the first mobile station MS1, when for example the first mobile station MS1 enters a radio cell of the first base station BS1.

The approximating data rate as the second utility value, may be expressed as:

$$r(\mu, \nu) = \log(1 + \text{SINR}') \qquad (3)$$

where SINR' is computed as the lower bound according to the equation (2) and where the most significant mode $u^H \tilde{H}^b$ of the effective MIMO channel $\tilde{H}^b$ has been replaced with a candidate MISO direction $\mu \cdot v$. In the mode $u^H \tilde{H}^b$ the term $x^H$ means the "Hermitian conjugate" of x. $u$ is a receive combining vector which preferably corresponds to the strongest mode of $\tilde{H}^b$.

The vector $v$ is taken from the feedback codebook and is one of the predefined transmission channel descriptions. Alternatively, other variants of receive beamforming can be replaced in this way. A value of the amplitude $\mu$ can be taken from a fixed set or may be calculated by a fixed rule such as:

$$\log(1 + \mu^2) = \frac{1}{|\mathcal{F}|} \sum_{\tilde{H}^b \in \mathcal{F}} \max_{\|u\|=1} \log\left(1 + |\langle u, \tilde{H}^b v \rangle|^2\right) \quad (4)$$

The average data rates $\bar{r} = \bar{r}\,(F)$ are based on the measured reference signals RS1, RS2, RS3 and the data rates $r = r(\mu, v)$ in equation (4) are based on the predefined transmission channel descriptions which can be recomputed by the first base station BS1.

In a further sub-step, the first mobile station MS1 compares the first utility values $\bar{r}$ with the second utility values $\bar{r} = \bar{r}\,(F)$ for the same resource blocks and for the same combinations of pre-coding vectors. This means mathematically, that the first mobile station MS1 has to find a single vector $\mu \cdot v$, given by a directional unit vector $v$ and amplitude $\mu$, that solves for example following equation:

$$\min_{v} \max_{v_b \neq \omega_b} |r - \bar{r}| \quad \text{s.t.} \quad v_{b'} = 0 \text{ for } b' \neq b \quad (5)$$

meaning that the single vector $\mu \cdot v$ is chosen in such a way, that a maximum error occurring by approximating the averaged data rate $\bar{r} = \bar{r}\,(F)$ by the data rates $r = r\,(\mu, v)$ is minimized.

Equation (3) describes a situation, in which the first mobile station MS1 may be only scheduled by a single base station $b$ and other base stations of coordination group CG are not transmitting to the first mobile station MS1. If it may not assured, which of the base stations will schedule the first mobile station MS1, one or several predefined transmission channel descriptions will be determined for several or all base stations of the coordination group CG. This means $\mu \to \mu_b$, $v \to v_b$. In the following a description for one of the base stations is exemplarily given.

Instead of the exemplary given metric

$$d(r, \bar{r}) = \max\{|r - \bar{r}| \; : \; v_b \neq \omega_b \text{ and } v_{b'} = 0 \text{ for } b' \neq b\}$$

other metrics such as an average rate error instead of the maximum error may be used.

In a next sub-step after solving equation (5), the first mobile station MS1 may select one of the predefined transmission channel descriptions providing a best match in utility and outputs an indication of that predefined transmission channel description and preferably an amplitude factor for the indicated predefined transmission channel description in a first feedback report FBR1.

The amplitude factor may be an adaptation factor between a normalized predefined transmission channel description and a power level of a characteristic of the first transmission channel TC1.

In an alternative, the first mobile station MS1 reports amplitude factors for each antenna element of an antenna system of the first mobile station MS1 between the normalized system description and the characteristic of the first transmission channel TC1.

The calculation of the value of the adaptation parameter is required when normalized predefined transmission channel descriptions are used, because a normalized predefined transmission channel description fitting best to the characteristic of the transmission channel TC1 is not taking into account the attenuation of signals and a noise level due to external noise sources.

The amplitude factor may be for example a noise power. The noise power may be obtained from a ratio between a reception power level of the first transmission channel TC1 and a power level of the external noise sources. Due to calculation requirements for the noise power normally an AWGN power (AWGN = additive white Gaussian noise) is used.

In a further alternative, the first mobile station MS1 may report additionally an approximation error. Therefore, the first mobile station MS1 may calculate the remaining approximation errors in equation (5) between the first utility values and the second utility values for same combination of pre-coding vectors of the transmit codebook.

In a further sub-step, the first mobile station MS1 may determine a smallest approximation error of the calculated approximation errors or an approximation error below a first pre-defined threshold.

In an even further alternative, the first mobile station MS1 may calculate an adaptation parameter depending on the approximation error in equation (5).

Using the noise power as the adaptation parameter, the approximation error can be taken into account for example by increasing the noise power to an adequate power level.

The advantage of the combination of the value of the adaptation parameter and the approximation error value into a single value is the reduction of feedback information in the first feedback information report FIR1. Alternatively, one or more further indications for one or more further predefined transmission channel description may be output, if there are two or more predefined transmission channel descriptions providing nearly a similar smallest difference.

In a next step M1/8 the first mobile station MS1 transmits the first feedback report FBR1 to the first base station BS1.

In a further step M1/9 the first base station BS1 receives the first feedback report FBR1.

In a next step M1/10 the first base station BS1 selects a radio resource such as a first pre-coding vector and a time slot for the first mobile station MS1 based on the first feedback report FBR1.

Alternatively, the first mobile station MS1 may transmit in addition a further feedback report to the third base station BS3, so that either the first base station BS1 or the third base station BS3 may select in a predefined order a radio resource for the first mobile station MS1. Or both, the first base station BS1 and the third base station BS3 may select jointly radio resources for the first mobile station MS1 for a cooperative transmission of data to the first mobile station MS1 at a same time.

The selection of the first pre-coding vector at the first base station BS1 comprises several sub-steps:

In a first sub-step, the first base station BS1 calculates a third utility value such as a data rate based on the predefined transmission channel description for one of the combinations of pre-coding vectors using equation (4). The determining SINR' was also computed by the mobile station MS1 and due to the invention can be recomputed by the base station.

If for example only the first mobile station MS1 needs to be scheduled, the first sub-step is repeated only for that combinations of pre-coding vectors, which comprise only one pre-coding vector. If for example the transmit codebook comprises eight pre-coding vectors and the combinations should be based on all pre-coding vectors, than the first sub-step must be repeated eight times.

In a further sub-step, the first base station BS1 maximizes a weighted sum utility for third utility values $r_m$ of the mobile stations MS1, MS2, MS3 (i.e. $m = \{1, 2, 3\}$), which have transmitted feedback reports with indications of predefined transmission channel description to the first base station BS1 and which might be scheduled by the first base station BS1 using following equation:

$$\max_{\substack{\text{beamforming} \\ \text{vectors}}} \max_{\substack{\text{MS selected} \\ \text{for transmsion}}} \sum_{m \in \text{MS}} q_m r_m \qquad (6)$$

where:

- $q_m$ may be a quality of service weights of mobile stations
- MS is a subset of scheduled mobile stations

The first base station BS1 selects a pre-coding vector for the first mobile station MS1 and/or for one or several of the further mobile stations MS2, MS3, which maximize an overall data rate at the first base station BS1 or for which the overall data rate is above a third predefined threshold. The first base station BS1 estimates from the indicated predefined transmission channel descriptions, which one of the pre-coding vectors is suitable for the first mobile station MS1 and/or for one or several of the further mobile stations MS2, MS3.

If the approximation error is included as separate information in the feedback report, a number of third utility values $r_m$ will be reduced for the calculation at the first base station BS1. Thereby, the rate approximation calculation can be further improved and even more suitable modulation and coding schemes can be selected.

If the approximation error may be included within the amplitude factor, the first base station BS1 can use the same calculations as given above according to equation (6). In such a case, the first mobile station MS1 reports a situation of reduced amplitudes of signals received from the first base station BS1. Thereby, the first mobile station MS1 impairs its own situation for making the transmission of user data between the first base station BS1 and the first mobile station MS1 more robust (probability for transmission errors may be reduced).

The first base station BS1 may request the first mobile station MS1 for reporting the approximation error as separate information in the feedback report or for including the approximation error within the amplitude factor. In an alternative, the first mobile station MS1 may decide itself to report the approximation error as a separate information in the feedback report or to include the approximation error within the amplitude factor.

Alternatively, the first base station BS1 selects pre-coding vectors for the mobile stations MS1, MS2, MS3, which optimize fairness for the mobile stations MS1, MS2, MS3 or which optimize QoS values for the mobile stations MS1, MS2, MS3.

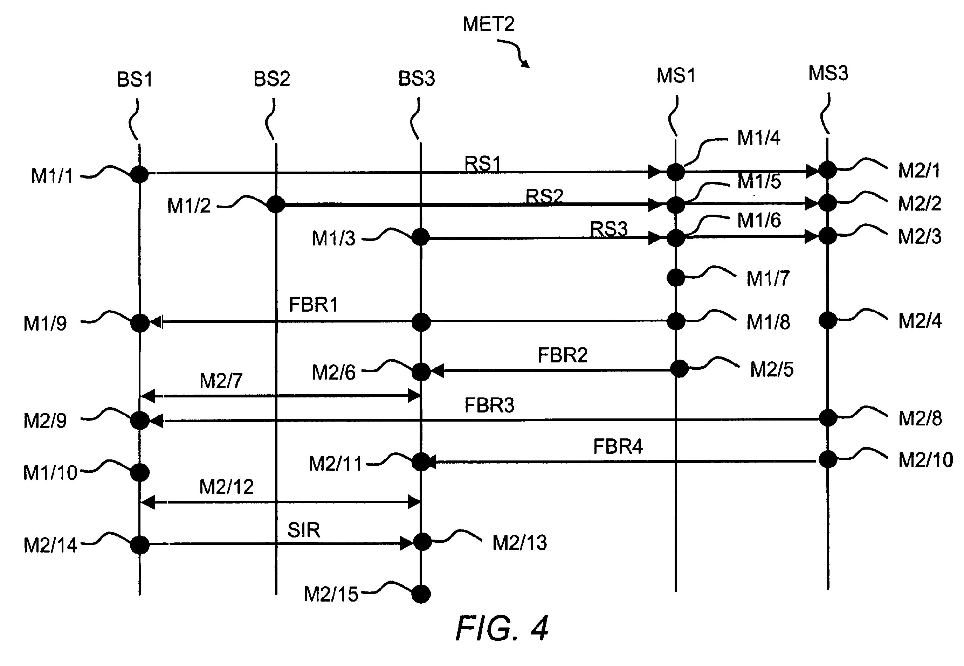

Referring to Figure 4 a flow diagram of a method MET2 in accordance to a second embodiment of the invention is shown. In addition to the steps M1/1 to M1/10 performed in the first embodiment of the invention, steps M2/1 to M2/15 may be performed additionally. The number and order of the steps for performing the method MET2 is not critical, and as can be understood by those skilled in the art, that the number of the steps and the order may vary without departing from the scope of the invention.

In further steps M2/1, M2/2, M2/3, the third mobile station MS3 measures the reference signals RS1, RS2, RS3.

In a further step M2/4, the third mobile station MS3 may select one or several predefined transmission channel descriptions approximating a further transmission channel (not shown in Figure 1 for simplification) and approximating an interference component of an even further transmission channel (not shown in Figure 1 for simplification).

The first antenna system BS-AS1 of the first base station BS1 and the third antenna system BS-AS3 of the third base station BS3 belong the same coordination group CG as shown in Figure 1. For enabling an advanced coordination the feedback codebooks for the first antenna system BS-AS1 and the third antenna system BS-AS3 are preferably identical. This means, that an indication of the first mobile station MS1 according to the first antenna system BS-AS1 means a same predefined transmission channel description as an indication of the first mobile station MS1 according to the third antenna system BS-AS3. Preferably, mobile stations within the coverage area of the coordination group CG transmit indications for one or several predefined transmission channel descriptions to several or all base stations of the coordination group CG. This means, that the first mobile station MS1 may send indications for the transmission channels TC1 and TC3 to the first base station BS1 and the third base station BS3.

In a next step M2/5, the first mobile station MS1 may transmit a second feedback report FBR2 with one or several indications for the one or several predefined transmission channel descriptions approximating the third transmission channel TC3 and approximating an interference component of the transmission channel TC2 to the third base station BS3.

The second feedback report FBR2 is received by the third base station BS3 in step M2/6

In a further step M2/7, the first base station BS1 and the third base station BS3 may exchange preferably the information of the feedback reports FBR1, FBR2. In an alternative, the first mobile station MS1 may transmit feedback reports to the first and the third base station BS1, BS3 comprising indications for predefined transmission channel descriptions approximating the first or the third transmission channel TC1, TC3 and interference components of the second transmission channel TC2. In a further alternative, the first mobile station MS1 may transmit a feedback report for example only to the first base station BS1 comprising indications for predefined transmission channel descriptions approximating the first and the third transmission channel TC1, TC3 and interference components of the second transmission channel TC2 and the first base stations BS1 forwards the information to the third base station BS3.

In a next step M2/8, the third mobile station MS3 may transmit a third feedback report FBR3 with one or several indications for the one or several predefined transmission channel descriptions approximating a fourth transmission channel between the first base station BS1 and the third mobile station MS3 and approximating an interference component of an a fifth transmission channel between the second base station BS2 and the third mobile station MS3 to the first base station BS1.

The third feedback report FBR3 is received by the first base station BS1 in step M2/9.

In a next step M2/10, the third mobile station MS3 may transmit a fourth feedback report FBR4 with one or several indications for the one or several predefined transmission channel descriptions approximating a sixth transmission channel between the third base station BS3 and the third mobile station MS3 and approximating an interference component of the fifth transmission channel between the second base station BS2 and the third mobile station MS3 to the first base station BS1.

The fourth feedback report FBR4 is received by the third base station BS3 in step M2/11.

In a further step M2/12, the first base station BS1 and the third base station BS3 may exchange preferably the information of the feedback reports FBR3,FBR4.

In a next step M2/13, the first base station MS1 may transmit to the third base station BS3 a scheduling information report SIR including information for example for scheduled users (e.g. the first mobile station MS1), assigned beamforming vectors and/or allocated transmission power.

**EP 2 378 688 B1**

In a further step M2/14, the report with the scheduling information report SIR is received at the third base station BS3.

In a next step M2/15, the third base station BS3 may select a radio resource for the third mobile station MS3 based on an equivalent mechanism as described according to Figure 3 for the first base station BS1 and the first mobile station MS1 and further based on the scheduling information about the first mobile station MS1 received from the first base station BS1 using for example the forward coordination method as described above. Alternatively, the third base station BS3 may select at step M2/15 a same radio resource at a same time for the first mobile station MS1 for a jointly transmission of the first base station BS1 and the third base station BS3 to the first mobile station MS1.

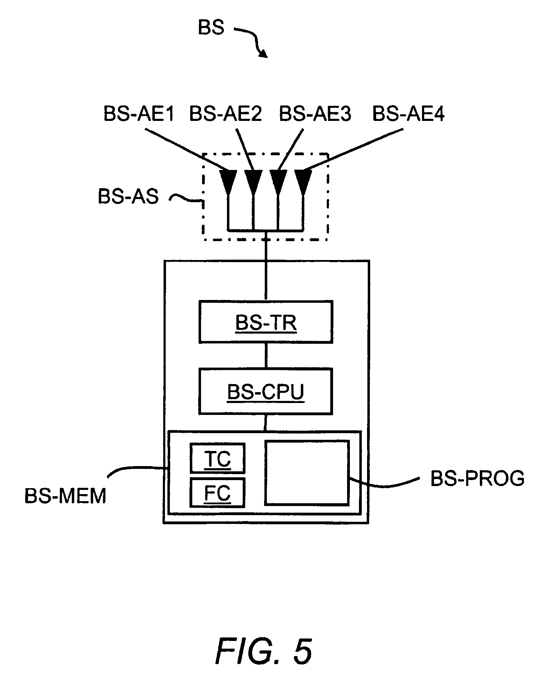

Referring to Figure 5 a base station BS comprises an antenna system BS-AS, a transceiver BS-TR, a CPU (CPU = central processing unit) BS-CPU, and a computer readable medium BS-MEM. The CPU BS-CPU is foreseen for executing a computer readable program BS-PROG.

The base station BS may be the first base station BS1, the second base station BS2, or the third base station BS3 shown in Figure 1.

The antenna system BS-AS may comprise a first antenna element BS-AE1, a second antenna element BS-AE2, a third antenna element BS-AE3 and a fourth antenna element BS-AE4. Alternatively, the antenna system BS-AS may comprise one, two or three antenna elements or more than four antenna elements.

The transceiver BS-TR transmits the reference signals RS via one of the transmission channels TC1, TC2, TC3 and receives the feedback information reports FBR2, FBR2, FBR3 comprising the indications for the predefined transmission channel descriptions approximating the characteristic of one of the transmission channels TC1, TC2, TC3 between the base stations BS7, BS2, BS3 and the mobile station MS1, MS2, MS3 and approximating the interference component of another one of the transmission channels TC1, TC2, TC3.

The computer readable medium BS-MEM is foreseen for storing the computer readable program BS-PROG, the feedback codebook FC comprising the set of predefined transmission channel descriptions, and preferably the transmit codebook TC comprising the set of pre-coding vectors.

The transmit codebook TC and the feedback codebook FC can be configured locally during initial operation or can be remotely configured for example by a network element as for example an operation and maintenance centre.

The computer readable program BS-PROG is foreseen for executing steps of the method according to the first (see Figure 3) and/or the second (see Figure 4) embodiment of the invention.

In particular, the computer readable program BS-PROG, the transceiver BS-TR and the antenna system BS-AS may be used for providing interferer information indicating one or several antenna systems as an interferer for one or several of the mobile stations MS1, MS2, MS3 and/or for providing interference information describing an interference situation for one or several of the mobile stations MS1, MS2, MS3. The computer readable program BS-PROG may be used for selecting one or several radio resources for one or several of the mobile stations MS1, MS2, MS3 based on one or several indications of one or several of the mobile stations MS1, MS2, MS3 for one or several predefined transmission channel descriptions approximating one of the transmission channels TC1, TC2, TC3 and approximating one or several interference components of one or several other of the transmission channels TC1, TC2, TC3 between one or several interferers and one of the mobile stations MS1, MS2, MS3.

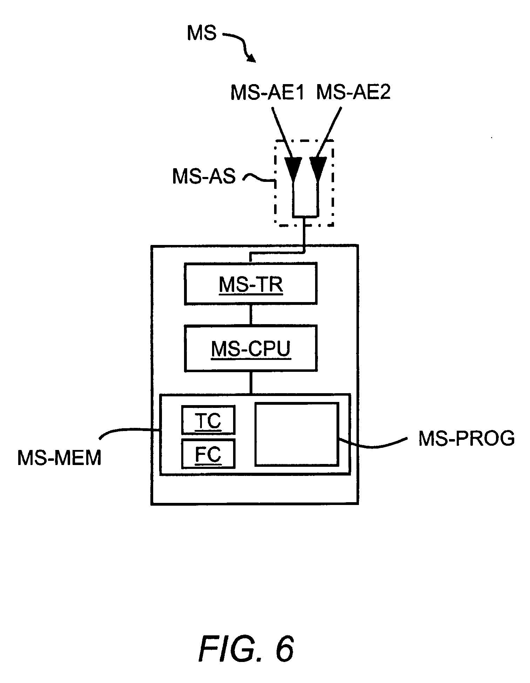

Referring to Figure 6 a mobile station MS comprises an antenna system MS-AS, a transceiver MS-TR, a CPU (CPU = central processing unit) MS-CPU, and a computer readable medium MS-MEM. The CPU MS-CPU is foreseen for executing a computer readable program MS-PROG.

The mobile station MS may be the first mobile station MS1, the second mobile station MS2, or the third mobile station MS3 shown in Figure 1. The antenna system MS-AS may comprise a first antenna element MS-AE1 and a second antenna element MS-AE2. Alternatively, the antenna system MS-AS may comprise one antenna element or more than two antenna elements.

The transceiver MS-TR receives the reference signals RS via one of the transmission channels TC1, TC2, TC3 and transmits the feedback information reports FBR1, FBR2, BBR3 comprising one or several indications for the predefined transmission channel descriptions approximating the characteristic of one of the transmission channels TC1, TC2, TC3 between the base stations BS1, BS2, BS3 and the mobile stations MS1, MS2, MS3 and approximating the interference component of another one of the transmission channels TC1, TC2, TC3.

The computer readable medium MS-MEM is foreseen for storing the computer readable program MS-PROG, the feedback codebook FC comprising the set of predefined transmission channel descriptions, and preferably the transmit codebook TC comprising the set of pre-coding vectors.

The transmit codebook TC and the feedback codebook FC can be configured locally during initial operation or can be remotely configured for example via one of the base stations BS1, BS2, BS3 by a network element as for example an operation and maintenance centre.

The computer readable program MS-PROG is foreseen for executing steps of the method according to the first (see Figure 3) and/or the second (see Figure 4) embodiment of the invention.

In particular, the antenna system MS-AS and the transceiver MS-TR may be used for measuring the reference signals RS1, RS2, RS3 of one or several of the transmission channels TC1, TC2, TC3 between one or several of the antenna systems AS1, AS2, AS3 of the radio communication system RCS) and the mobile station MS and may be used for reporting one or several indications of one or several of the predefined transmission channel descriptions. The computer readable program MS-PROG may be used for selecting one or several of the predefined transmission channel descriptions approximating one of the transmission channels TC1, TC2, TC3 and approximating one or several interference components of one or several other of the transmission channels TC1, TC2, TC3.

**Claims**

1. A method (MET1, MET2) for resource allocation in a radio communication system (RCS) comprising a base station (BS, BS1, BS2, BS3) with a transmit codebook (TC) with at least two predefined pre-coding vectors and a mobile station (MS, MS1, MS2, MS3) with said transmit codebook (TC) with said at least two predefined pre-coding vectors, said method (MET1, MET2) comprising the step of measuring (M1/4, M1/5, M1/6, M2/1, M2/2, M2/3) at a mobile station (MS, MS1, MS2, MS3) first reference signals (RS1, RS2, RS3) of a first transmission channel (TC1, TC2, TC3) between a first antenna system (BS-AS, BS-AS1, BS-AS2, BS-AS3) of a base station (BS, BS1, BS2, BS3) of said radio communication system (RCS) and said mobile station (MS, MS1, MS2, MS3) and at least second reference signals (RS1, RS2, RS3) of at least one second transmission channel . (TC1, TC2, TC3) between at least one second antenna system (BS-AS, BS-AS1, BS-AS2, BS-AS3) of said base station BS, BS1, BS2, BS3) or of a further base station (BS, BS1, BS2, BS3) of said radio communication system (RCS) and said mobile station (MS, MS1, MS2, MS3), **characterized in that** said base station (BS, BS1, BS2, BS3) and said mobile station (MS, MS1, MS2, MS3) further comprise a feedback codebook (FC) with at least two predefined transmission channel descriptions, and said method further comprises the steps of:

   - selecting (M1/7) at said mobile station (MS, MS1, MS2, MS3) a predefined transmission channel description of said feedback codebook (FC) approximating said first transmission channel (TC1, TC2, TC3) and approximating an interference component of said at least second transmission channel (TC1, TC2, TC3),
   - transmitting (M1/8) an indication of said predefined transmission channel description in a feedback report to said base station (BS,BS1, BS2, BS3),
   - estimating at said base station (BS, BS1, BS2, BS3) from said indicated predefined transmission channel description a pre-coding vector of said transmit codebook (TC) suitable for said mobile station (MS, MS1, MS2, MS3), and
   - selecting (M1/10) at said base station (BS, BS1, BS2, BS3) of said first antenna system (BS-AS, BS-AS1, BS-AS2, BS-AS3) said pre-coding vector for said mobile station (MS, MS1, MS2, MS3) based on said indication of said predefined transmission channel description .

2. Method (MET1, MET2) according to claim 1, wherein said method further comprises the step of transmitting interferer information to said mobile station (MS, MS1, MS2, MS3) indicating said at least one second antenna system (BS-AS, BS-AS1, BS-AS2, BS-AS3) as an interferer.

3. Method according to claim 1, wherein said method further comprises the steps of:

   - calculating at said mobile station (MS, MS1, MS2, MS3) a signal-to-interference-and-noise-ratio value or a signal-to-interference value for a resource block and for different combinations of at least a subset of pre-coding vectors based on a knowledge of a transmission characteristic of said first reference signals (RS1, RS2, RS3) at said first antenna system (BS-AS, BS-AS1, BS-AS2, BS-AS3), based on a knowledge of a reception characteristic of said first reference signals (RS1, RS2, RS3) at said mobile station, based on a knowledge of a transmission characteristic of said second reference signals (RS1, RS2, RS3) at said at least one second antenna system (BS-AS, BS-AS1, BS-AS2, BS-AS3) and based on a knowledge of a reception characteristic of said second reference signals (RS1, RS2, RS3) at said mobile station,
   - calculating at said mobile station (MS, MS1, MS2, MS3) for said resource block a first utility value,
   - calculating at said mobile station (MS, MS1, MS2, MS3) for said radio resource block and for same combinations of pre-coding vectors further signal-to-interference-and-noise-ratio values or further signal-to-interference values and second utility values based on at least a subset of predefined transmission channel descriptions,
   - comparing at said mobile station (MS, MS1, MS2, MS3) said first utility value with said second utility values for said resource blocks and for said same combinations of pre-coding vectors,
   - calculating at said base station (BS, BS1, BS2, BS3) a third utility value based on said indicated predefined transmission channel description for one of said combinations of said pre-coding vectors,

- repeating said calculation at said base station (BS, BS1, BS2, BS3) for further combinations of said pre-coding vectors, and
- maximizing at said base station (BS, BS1, BS2, BS3) a weighted sum utility for said third utility values of said mobile station (MS, MS1, MS2, MS3).

4. Method according to claim 1, wherein said predefined channel description is a line of sight channel of line of sight channels with equidistant angles of departure.

5. Method (MET1, MET2) according to any of the preceding claims, wherein said predefined transmission channel description is a predefined channel vector or a predefined channel matrix depending on a number of antenna elements (BS-AE1, BS-AE2, BS-AE3, BS-AE4) used at said first and said at least second antenna system (BS-AS, BS-AS1, BS-AS2, BS-AS3) of said base station (BS, BS1, BS2, BS3) or said further base station (BS, BS1, BS2, BS3) and depending on a further number of antenna elements (MS-AE1, MS-AE2) used at said mobile station (MS, MS1, MS2, MS3).

6. Method (MET1, MET2) according to any of the preceding claims, wherein said predefined transmission channel description is a predefined normalized transmission channel description, wherein said method further comprises the step of calculating at said mobile station (MS, MS1, MS2, MS3) an adaptation factor between said predefined normalized transmission channel description and said first transmission channel (TC1, TC2, TC3) with said interference component of said at least second transmission channel (TC1, TC2, TC3), wherein said indication indicates said predefined normalized transmission channel description and wherein a feedback information from said mobile station (MS, MS1, MS2, MS3) further comprises said adaptation factor.

7. Method according to claim 6, wherein said method further comprises the steps of:

- calculating approximation errors between said first utility values and said second utility values for said same combinations of pre-coding vectors, and
- reporting an approximation error of said approximation errors.

8. A mobile station (MS, MS1, MS2, MS3) for use in a radio communication system (RCS), said mobile station (MS, MS1, MS2, MS3) comprising:

- a transmit codebook (TC) with at least two predefined pre-coding vectors,
- means for measuring (MS-AS, MS-TR) first reference signals of a first transmission channel (TC1, TC2, TC3) between a first antenna system (BS-AS, BS-AS1, BS-AS2, BS-AS3) of said radio communication system (RCS) and said mobile station (MS, MS1, MS2, MS3) and at least second reference signals of at least one second transmission channel (TC1, TC2, TC3) between at least one second antenna system (BS-AS, BS-AS1, BS-AS2, BS-AS3) of said radio communication system (RCS) and said mobile station (MS, MS1, MS2, MS3),

**characterized in that** said mobile station (MS, MS1, MS2, MS3) further comprises:

- a feedback codebook (FC) with at least two predefined transmission channel descriptions,
- means for selecting (MS-PROG) one of said predefined transmission channel descriptions approximating said first transmission channel (TC1, TC2, TC3) and approximating an interference component of said at least second transmission channel (TC1, TC2, TC3), and
- means for reporting (MS-AS, MS-TR) an indication of said one of said predefined transmission channel description.

9. A base station (BS, BS1, BS2, BS3) for use in a radio communication system (RCS), said base station (BS, BS1, BS2, BS3) comprising:

- an antenna system (BS-AS, BS-AS1, BS-AS2, BS-AS3) for transmitting reference signals via a transmission channel (TC1, TC2, TC3) between said antenna system (BS-AS, BS-AS1, BS-AS2, BS-AS3) and a mobile station (MS, MS1, MS2, MS3), and
- a transmit codebook (TC) with at least two predefined pre-coding vectors,

**characterized in that** said base station (BS, BS1, BS2, BS3) further comprises:

- a feedback codebook (FC) with at least two predefined transmission channel descriptions,
- means for receiving an indication of a predefined transmission channel description of said feedback codebook (FC) in a feedback report from said mobile station (MS, MS1, MS2, MS3) approximating said transmission channel (TC1, TC2, TC3) and approximating an interference component of at least a second transmission channel (TC1, TC2, TC3) between at least one second antenna system (BS-AS, BS-AS1, BS-AS2, BS-AS3) and said mobile station (MS, MS1, MS2, MS3),
- means for estimating from said indicated predefined transmission channel description a pre-coding vector of said transmit codebook suitable for said mobile station (MS, MS1, MS2, MS3), and
- means for selecting (BS-PROG) said pre-coding vector for said mobile station (MS, MS1, MS2, MS3) based on said indication of said mobile station (MS, MS1, MS2, MS3).

10. Radio communication system (RCS) comprising at least one mobile station (MS, MS1, MS2, MS3) according to claim 8 and at least one base station (BS, BS1, BS2, BS3) according to claim 9.

## Patentansprüche

1. Verfahren (MET1, MET2) zur Ressourcenzuweisung In einem Funkkommunikationssystem (RCS), welches eine Basisstation (BS, BS1, BS2, BS3) mit einem Übertragungs-Codebuch (TC) mit mindestens zwei vordefinierten Vorcodierungsvektoren und eine Mobilstation (MS, MS1, MS2, MS3) mit dem besagten Übertragungs-Codebuch (TC) mit den besagten mindestens zwei vordefinierten Vorcodierungsvektoren umfasst, wobei das besagte Verfahren (MET1, MET2) den Schritt des Messens (M1/4. M1/5, M1/6, M2/1, M2/2, M2/3), an einer Mobilstation (MS, MS1, MS2, MS3), von ersten Referenzsignalen (RS1, RS2, RS3) eines ersten Übertragungskanals (TC1, TC2, TC3) zwischen einem ersten Antennensystem (BS-AS, BS-AS1, BS-AS2, BS-AS3) einer Basisstation (BS, BS1, BS2, BS3) des besagten Funkkommunikationssystems (RCS) und der besagten Mobilstation (MS, MS1, MS2, MS3) und von mindestens zweiten Referenzsignalen (RS1, RS2, RS3) mindestens eines zweiten Übertragungskanals (TC1, TC2, TC3) zwischen mindestens einem zweiten Antennensystem (BS-AS, BS-AS1, BS-AS2, BS-AS3) der besagten Basisstation (BS, BS1, BS2, BS3) oder einer weiteren Basisstation (BS, BS1, BS2, BS3) des besagten Funkkommunikationssystems (RCS) und der besagten Mobilstation (MS, MS1, MS2, MS3) umfasst, **dadurch gekennzeichnet, dass** die besagte Basisstation (BS, BS1, BS2, BS3) und die besagte Mobilstation (MS, MS1, MS2, MS3) weiterhin ein Feedback-Codebuch (FC) mit mindestens zwei vordefinierten Übertragungskanalbeschreibungen umfassen und das besagte Verfahren weiterhin die folgenden Schritte umfasst:

- Auswählen (M1/7), an der besagten Mobilstation (MS, MS1, MS2, MS3), einer vordefinierten, dem besagten ersten Übertragungskanal (TC1, TC2, TC3) und einer Interferenzkomponente des besagten mindestens zweiten Obertragungskanals (TC1, TC2, TC3) angenäherten Übertragungskanalbeschreibung des besagten Feedback-Codebuchs (FC),
- Übertragen (M1/8) einer Angabe über die besagte vordefinierte Übertragungskanalbeschreibung in einer Feedback-Meldung an die besagte Basisstation (BS, BS1, BS2, BS3),
- Schätzen, an der besagten Basisstation (BS, BS1, BS2, BS3), ausgehend von der besagten angegebenen vordefinierten Übertragungskanalbeschreibung, eines für die besagte Mobilstation (MS, MS1, MS2, MS3) geeigneten Vorcodierungsvektors des besagten Übertragungs-Codebuchs (TC), und
- Auswählen (M1/10), an der besagten Basisstation (BS, BS1, BS2, BS3) des besagten ersten Antennensystems (BS-AS, BS-AS1, BS-AS2, BS-AS3), des besagten Vorcodierungsvektors für die besagte Mobilstation (MS, MS1, MS2, MS3) auf der Basis der besagten Angabe der besagten vordefinierten Übertragungskanalbeschreibung.

2. Verfahren (MET1, MET2) nach Anspruch 1, wobei das besagte Verfahren weiterhin den Schritt des Übertragens von Störerinformationen, welche das besagte mindestens eine zweite Antennensystem (BS-AS, BS-AS1, BS-AS2, BS-AS3) als einen Störer angeben, an die besagte Mobilstation (MS, MS1, MS2, MS3) umfasst.

3. Verfahren nach Anspruch 1, wobei das besagte Verfahren die folgenden Schritte umfasst:

- Berechnen, an der besagten Mobilstation (MS, MS1, MS2, MS3), eines Signal-zu-Interferenz-und-Rauschverhältnis-Wertes und oder eines Signal-zu-Interferenz-Wertes für einen Ressourcenblock und für verschiedene Kombinationen mindestens eines Tellsatzes von Vorcodierungsvektoren auf der Basis einer Kenntnis einer Übertragungseigenschaft der besagten ersten Referenzsignale (RS1, RS2, RS3) an dem besagten ersten Antennensystem (BS-AS, BS-AS1, BS-AS2, BS-AS3), auf der Basis einer Kenntnis einer Empfangseigenschaft des besagten ersten Referenzsignals RS1, RS2, RS3) an der besagten Mobilstation, auf der Basis einer Kenntnis einer Sendeeigenschaft der besagten zweiten Referenzsignale (RS1, RS2, RS3) an dem besagten mindestens einen zweiten Antennensystem (BS-AS, BS-AS1, BS-AS2, BS-AS3) und auf der Basis einer Kenntnis einer Empfangseigenschaft der besagten zweiten Referenzsignale (RS1, RS2, RS3) an der besagten Mobilstation,

- Berechnen, an der besagten Mobilstation (MS, MS1, MS2, MS3), eines ersten Nutzwerts für den besagten Ressourcenblock,

- Berechnen, an der besagten Mobilstation (MS, MS1, MS2, MS3), weiterer Signal-zu-Interferenz-und-Rauschverhältnis-Werte oder weiterer Signal-zu-Interferenz-Werte und zweiter Nutzwerte für den besagten Funkressourcenblock und für dieselben Kombinationen von Vorcodierungsvektoren auf der Basis mindestens eines Teilsatzes von vordefinierten Übertragungskanalbeschreibungen,

- Vergleichen, an der besagten Mobilstation (MS, MS1, MS2, MS3), des besagten ersten Nutzwerts mit den besagten zweiten Nutzwerten für die besagten Ressourcenblöcke und für die besagten selben Kombinationen von Vorcodierungsvektoren,

- Berechnen, an der besagten Basisstation (BS, BS1, BS2, BS3), eines dritten Nutzwerts auf der Basis der besagten angegebenen vordefinierten Übertragungskanalbeschreibung für eine der besagten Kombinationen der besagten Vorcodierungsvektoren,

- Wiederholen der besagten Berechnung an der besagten Basisstation (BS, BS1, BS2, BS3) für weitere Kombinationen der besagten Vorcodierungsvektoren, und

- Maximieren, an der besagten Basisstation (BS, BS1, BS2, BS3), eines gewichteten Gesamtnutzens für die besagten dritten Nutzwerte der besagten Mobilstation (MS, MS1, MS2, MS3).

4. Verfahren nach Anspruch 1, wobei die besagte vordefinierte Kanalbeschreibung ein Sichtlinienkanal unter Sichtlinienkanälen mit äquidistanten Ausgangswinkeln ist.

5. Verfahren (MET1, MET2) nach einem beliebigen der vorstehenden Ansprüche, wobei die besagte vordefinierte Übertragungskanalbeschreibung ein vordefinierter Kanalvektor oder eine vordefinierte Kanalmatrix in Abhängigkeit von einer Anzahl von Antennenelementen (BS-AE1, BS-AE2, BS-AE3, BS-AE4), die an dem besagten ersten und an dem besagten mindestens zweiten Antennensystem (BS-AS, BS-AS1, BS-AS2, BS-AS3) der besagten Basisstation (BS, BS1, BS2, BS3) oder der besagten weiteren Basisstation (BS, BS1, BS2, BS3) verwendet werden, und In Abhängigkeit von einer weiteren Anzahl von Antennenelementen (BS-AE1, BS-AE2, BS-AE3, BS-AE4), die an der besagten Mobilstation (MS, MS1, MS2, MS3) verwendet werden, ist.

6. Verfahren (MET1, MET2) nach einem beliebigen der vorstehenden Ansprüche, wobei die besagte vordefinierte Übertragungskanalbeschreibung eine vordefinierte normalisierte Übertragungakanalbeschreibung ist, wobei das besagte Verfahren weiterhin den Schritt des Berechnens, an der besagten Mobilstation (MS, MS1, MS2, MS3), eines Anpassungsfaktors zwischen der besagten vordefinierten normalisierten Übertragungskanalbeschreibung und dem besagten ersten Übertragungskanal (TC1, TC2, TC3) mit der besagten Interferenzkomponente des besagten mindestens zweiten Übertragungskanals (TC1, TC2, TC3) umfasst, wobei die besagte Angabe die besagte vordefinierte normalisierte Übertragungskanalbeschreibung anzeigt, und wobei eine Feedback-Information von der besagten Mobilstation (MS, MS1, MS2, MS3) weiterhin den besagten Anpassungsfaktor umfasst.

7. Verfahren nach Anspruch 6, wobei das Verfahren weiterhin die folgenden Schritte umfasst:

- Berechnen von Approximationsfehlern zwischen den besagten ersten Nutzwerten und den besagten zweiten Nutzwerten für die besagten selben Kombinationen von Vorcodierungsvektoren, und
- Melden eines Approximstionsfehlers der besagten Approximationsfehler.

8. Mobilstation (MS, MS1, MS2, MS3) zur Verwendung in einem Funkkommunikationssystem (RCS), wobei die besagte Mobilstation (MS, MS1, MS2, MS3) umfasst:

- Ein Übertragungs-Codebuch (TC) mit mindestens zwei vordefinierten Vorcodierungsvektoren,
- Mittel zum Messen (MS-AS, MS-TR) von ersten Referenzsignalen eines ersten Übertragungskanals (TC1, TC2, TC3) zwischen einem ersten Antennensystem (BS-AS, BS-AS1, BS-AS2, BS-AS3) des besagten Funkkommunikationssystems (RCS) und der besagten Mobilstation (MS, MS1, MS2, MS3), und von mindestens zweiten Referenzsignalen mindestens eines zweiten Übertragungskanals (TC1, TC2, TC3) zwischen einem zweiten Antennensystem (BS-AS, BS-AS1, BS-AS2, BS-AS3) des besagten Funkkommunikationssystems (RCS) und der besagten Mobilstation (MS, MS1, MS2, MS3),

**dadurch gekennzeichnet, dass** die besagte Mobilstation (MS, MS1, MS2, MS3) weiterhin umfasst:

- Ein Feedback-Codebuch (FC) mit mindestens zwei vordefinierten Übertragungskanalbeschreibungen,
- Mittel zum Auswählen (MS-PROG) einer der besagten vordefinierten, dem besagten ersten Übertragungskanal (TC1, TC2, TC3) und einer Interferenzkomponente des besagten mindestens zweiten Übertragungskanals (TC1, TC2, TC3) angenäherten Übertragunaskanalbeschreibungen, und
- Mittel zum Melden (MS-AS, MS-TR) einer Angabe über die besagte eine der besagten vordefinierten Obertragungskamelbeschreibungen,

9. Basisstation (BS, BS1, BS2, BS3) zur Verwendung In einem Funkkommunikationssystem (RCS), wobei die besagte Basisstation (BS, BS1, BS2, BS3) umfasst:

- Ein Antennensystem (BS-AS, BS-AS1, BS-AS2, BS-AS3) zum Übertragen von Referenzsignalen über einen Übertragungskanal (TC1, TC2, TC3) zwischen dem besagten Antennensystem (BS-AS, BS-AS1, BS-AS2, BS-AS3) und einer Mobilstation (MS, MS1, MS2, MS3), und
- ein Übertragungs-Codebuch (TC) mit mindestens zwei vordefinierten Vorcodierungsvektoren,

**dadurch gekennzeichnet, dass** die besagte Basisstation (BS, BS1, BS2, BS3) weiterhin umfasst:

- Ein Feedback-Codebuch (FC) mit mindestens zwei vordefinierten Übertragungskanalbeschreibungen,
- Mittel zum Empfangen einer Angabe über eine vordefinierte Übertragungskanalbeschreibung des besagten Feedback-Codebuchs (FC), welche dem besagten Übertragungskanal (TC1, TC2, TC3) und einer Interferenzkomponente mindestens eines zweiten Übertragungskanals (TC1, TC2, TC3) zwischen mindestens einem zweiten Antennensystem (BS-AS, BS-AS1, BS-AS2, BS-AS3) und der besagten Mobilstation (MS, MS1, MS2, MS3) angenähert ist, in einer Feedback-Meldung von der besagten Mobilstation (MS, MS1, MS2, MS3),
- Mittel zum Schätzen, ausgehend von der besagten angegebenen vordefinierten Übertragungskanalbeschrelbung, eines Voroodierungsvektors des besagten Übertragungs-Codebuchs, welcher für die besagte Mobilstation (MS, MS1, MS2, MS3) geeignet ist, und
- Mittel zum Auswählen (BS-PROG) des besagten Vorcodierungsvektors für die besagte Mobilstation (MS, MS1. MS2, MS3) auf der Basis der besagten Angabe der besagten Mobilstation (MS, MS1, MS2, MS3).

10. Funkkommunikationssystem (RCS) mit mindestens einer Mobilstation (MS, MS1, MS2, MS3) gemäß Anspruch 8, und mindestes einer Basisstation (BS, BS1, BS2, BS3) gemäß Anspruch 9.

**Revendications**

1. Procédé (MET1, MET2) d'allocation des ressources dans un système de radiocommunication (RCS) comprenant une station de base (BS, BS1, BS2, B53) disposant d'un répertoire de transmission (TC) avec au moins deux vecteurs de précodage prédéfinis et une station mobile (MS, MS1, MS2, MS3) disposant dudit répertoire de transmission (TC) avec lesdits au moins deux vecteurs de précodage prédéfinis, ledit procédé (MET1, MET2) comprenant l'étape de mesure (M1/4, M1/5, M1/6, M2/1, M2/2, M2/3), sur une station mobile (MS, MS1, MS2, MS3), de premiers signaux de référence (RS1, RS2, RS3) d'un premier canal de transmission (TC1, TC2, TC3) entre un premier système d'antennes (BS-AS, BS-AS1, BS-AS2, BS-AS3) d'une station de base (B5, BS1, BS2, BS3) dudit système de radiocommunication (RCS) et de ladite station mobile (MS, MS1, MS2, MS3) et d'au moins des deuxièmes signaux de référence (RS1, RS2, RS3) d'au moins un deuxième canal de transmission (TC1, TC2, TC3) entre au moins un deuxième système d'antennes (BS-AS, BS-AS1, BS-AS2, BS-AS3) de ladite station de base (BS, BS1, BS2, BS3) ou d'une autre station de base (BS, BS1, BS2, B53) dudit système de radiocommunication (RCS) et de ladite station mobile (MS, MS1, MS2, MS3),
**caractérisé en ce que** ladite station de base (BS, BS1, BS2, BS3) et ladite station mobile (MS, MS1, MS2, MS3) comprennent en outre un répertoire de retour d'information (FC) avec au moins deux descriptions de canal de transmission prédéfini, et ledit procédé comprend en outre les étapes suivantes ;

- sélection (M1/7), au niveau de ladite station mobile (MS, MS1, MS2, MS3), d'une description de canal de transmission prédéfini dudit répertoire de retour d'information (FC) définissant approximativement ledit premier canal de transmission (TC1, TC2, TC3) et définissant approximativement une composante d'interférence dudit au moins un deuxième canal de transmission (TC1, TC2, TC3),
- transmission (M1/8) d'une Indication de ladite description de canal de transmission prédéfini dans une notification de retour d'information à ladite station de base (BS, BS1, BS2, BS3),

- estimation, au niveau de ladite station de base (BS, BS1, BS2, BS3) à partir de ladite description de canal de transmission prédéfini indiquée, d'un vecteur de précodage dudit répertoire de transmission (TC) approprié pour ladite station mobile (MS, MS1, MS2, MS3), et

- sélection (M1/10), au niveau de ladite station de base (BS, BS1, BS2, BS3) dudit premier système d'antennes (BS-AS, BS-AS1, BS-AS2, BS-AS3), dudit vecteur de précodage pour ladite station mobile (MS, MS1, MS2, MS3) en se basant sur ladite indication de ladite description de canal de transmission prédéfini.

**2.** Procédé (MET1, MET2) selon la revendication 1, selon lequel ledit procédé comprend en outre l'étape de transmission d'informations de brouilleur à ladite station mobile (MS, MS1, MS2, MS3) incluant ledit au moins un deuxième système d'antennes (BS-AS, BS-AS1, BS-AS2, BS-AS3) en tant que brouilleur.

**3.** Procédé selon la revendication 1, selon lequel ledit procédé comprend en outre les étapes suivantes :

- calcul, au niveau de ladite station mobile (MS, MS1, MS2, MS3), d'une valeur du rapport signal/interférence + bruit ou d'une valeur d'un rapport signal/interférence pour un bloc de ressources et pour différentes combinaisons d'au moins un sous-ensemble de vecteurs de précodage en se basant sur une connaissance d'une caractéristique de transmission desdits premiers signaux de référence (RS1, RS2, RS3) au niveau dudit premier système d'antennes (BS-AS, BS-AS1, BS-AS2, BS-AS3), en se basant sur une connaissance d'une caractéristique de réception desdits premiers signaux de référence (RS1, RS2, RS3) au niveau de ladite station mobile, en se basant sur une connaissance d'une caractéristique de transmission desdits deuxièmes signaux de référence (RS1, RS2, RS3) au niveau dudit au moins un deuxième système d'antennes (BS-AS, BS-AS1, BS-AS2, BS-AS3) et en se basant sur une connaissance d'une caractéristique de réception desdits deuxièmes signaux de référence (RS1, RS2, RS3) au niveau de ladite station mobile,

- calcul, au niveau de ladite station mobile (MS, MS1, MS2, MS3) pour ledit bloc de ressources, d'une première valeur de service,

- calcul, au niveau de ladite station mobile (MS, MS1, MS2, MS3), pour ledit bloc de ressources radioélectriques et pour la même combinaison de vecteurs de précodage, de valeurs supplémentaires du rapport signal/interférence + bruit ou de valeurs supplémentaires du rapport signal/interférence et de deuxièmes valeurs de service en se basant au moins sur un sous-ensemble de descriptions de canal de transmission prédéfini,

- comparaison, au niveau de ladite station mobile (MS, MS1, MS2, MS3), de ladite première valeur de service avec lesdites deuxièmes valeurs de service pour lesdits blocs de ressources et pour lesdites mêmes combinaisons de vecteurs de précodage,

- calcul, au niveau de ladite station de base (BS, BS1, BS2, BS3), d'une troisième valeur de service en se basant sur ladite description de canal de transmission prédéfini indiquée pour l'une desdites combinaisons desdits vecteurs de précodage,

- répétition dudit calcul au niveau de ladite station de base (BS, BS1, BS2, BS3) pour d'autres combinaisons desdits vecteurs de précodage, et

- maximisation, au niveau de ladite station de base (BS, BS1, BS2, BS3), d'un service total pondéré pour lesdites troisièmes valeurs de service de ladite station mobile (MS, MS1, MS2, MS3).

**4.** Procédé selon la revendication 1, selon lequel ladite description de canal prédéfini est un canal à visibilité directe parmi des canaux à visibilité directe ayant des angles de départ équidistants.

**5.** Procédé (MET1, MET2) selon l'une quelconque des revendications précédentes, selon lequel ladite description de canal de transmission prédéfini est un vecteur de canal prédéfini ou une matrice de canal prédéfinie dépendant d'un nombre d'éléments d'antenne (BS-AE1, BS-AE2, BS-AE3, BS-AE4) utilisés au niveau dudit premier et dudit au moins un deuxième système d'antennes (BS-AS, BS-AS1, BS-AS2, BS-AS3) de ladite station de base (BS, BS1, BS2, BS3) ou de ladite autre station de base (BS, BS1, BS2, BS3) et dépendant d'un nombre supplémentaire d'éléments d'antenne (MS-AE1, MS-AE2) utilisés au niveau de ladite station mobile (MS, MS1, MS2, MS3).

**6.** Procédé (MET1, MET2) selon l'une quelconque des revendications précédentes, selon lequel ladite description de canal de transmission prédéfini est une description de canal de transmission normalisé prédéfini, selon lequel ledit procédé comprend en plus l'étape de calcul, au niveau de ladite station mobile (MS, MS1, MS2, MS3), d'un facteur d'adaptation entre ladite description de canal de transmission normalisé prédéfini et ledit premier canal de transmission (TC1, TC2, TC3) avec ladite composante d'interférence dudit au moins un deuxième canal de transmission (TC1, TC2, TC3), ladite indication indiquant ladite description de canal de transmission normalisé prédéfini et une information de retour d'information de la part de ladite station mobile (MS, MS1, MS2, MS3) comprenant en outre ledit facteur d'adaptation. 6.

7. Procédé selon la revendication 6, selon lequel ledit procédé comprend en outre les étapes suivantes :

- calcul des erreurs d'approximation entre lesdites premières valeurs de service et lesdites deuxièmes valeurs de service pour lesdites mêmes combinaisons de vecteurs de précodage, et
- notification d'une erreur d'approximation desdites erreurs d'approximation.

8. Station mobile (MS, MS1, MS2, MS3) à utiliser dans un système de radiocommunication (RCS), ladite station mobile (MS, MS1, MS2, MS3) comprenant :

- un répertoire de transmission (TC) avec au moins deux vecteurs de précodage prédéfinis,
- des moyens pour mesurer (MS-AS, MS-TR) des premiers signaux de référence d'un premier canal de transmission (TC1, TC2, TC3) entre un premier système d'antennes (BS-AS, BS-AS1, BS-AS2, BS-AS3) dudit système de radiocommunication (RCS) et de ladite station mobile (MS, MS1, MS2, M53) et au moins des deuxièmes signaux de référence d'au moins un deuxième canal de transmission (TC1, TC2, TC3) entre au moins un deuxième système d'antennes (BS-AS, BS-AS1, BS-AS2, BS-AS3) dudit système de radiocommunication (RCS) et de ladite station mobile (MS, MS1, MS2, MS3), **caractérisée en ce que** ladite station mobile (MS, MS1, MS2, MS3) comprend en outre :
- un répertoire de retour d'information (FC) avec au moins deux descriptions de canal de transmission prédéfini,
- des moyens pour sélectionner (MS-PROG) l'une desdites descriptions de canal de transmission prédéfini définissant approximativement ledit premier canal de transmission (TC1, TC2, TC3) et définissant approximativement une composante d'interférence dudit au moins un deuxième canal de transmission (TC1, TC2, TC3), et
- des moyens pour notifier (MS-AS, MS-TR) une indication de ladite une de ladite description de canal de transmission prédéfini.

9. Station de base (BS, BS1, BS2, BS3) à utiliser dans un système de radiocommunication (RCS), ladite station de base (BS, BS1, BS2, BS3) comprenant :

- un système d'antennes (BS-AS, BS-AS1, BS-AS2, BS-AS3) pour transmettre des signaux de référence par le biais d'un canal de transmission (TC1, TC2, TC3) entre ledit système d'antennes (BS-AS, BS-AS1, BS-AS2, BS-AS3) et une station mobile (MS, MS1, MS2, MS3), et
- un répertoire de transmission (TC) avec au moins deux vecteurs de précodage prédéfinis,

**caractérisée en ce que** ladite station de base (BS, BS1, BS2, BS3) comprend en outre :

- un répertoire de retour d'information (FC) avec au moins deux descriptions de canal de transmission prédéfini,
- des moyens pour recevoir une indication d'une description de canal de transmission prédéfini dudit répertoire de retour d'information (FC) dans une notification de retour d'information de la part de ladite station mobile (MS, MS1, MS2, MS3) définissant approximativement ledit canal de transmission (TC1, TC2, TC3) et définissant approximativement une composante d'interférence dudit au moins un deuxième canal de transmission (TC1, TC2, TC3) entre au moins un deuxième système d'antennes (BS-AS, BS-AS1, BS-AS2, BS-AS3) et de ladite station mobile (MS, MS1, MS2, MS3),
- des moyens pour estimer, à partir de ladite description de canal de transmission prédéfini indiquée, un vecteur de précodage dudit répertoire de transmission approprié pour ladite station mobile (MS, MS1, MS2, MS3), et
- des moyens pour sélectionner (BS-PROG) ledit vecteur de précodage pour ladite station mobile (MS, MS1, MS2, MS3) en se basant sur ladite indication de ladite station mobile (MS, MS1, MS2, MS3).

10. Système de radiocommunication (RCS) comprenant au moins une station mobile (MS, MS1, MS2, MS3) selon la revendication 8 et au moins une station de base (BS, BS1, BS2, BS3) selon la revendication 9.

*FIG. 1*

*FIG. 2*

EP 2 378 688 B1

FIG. 3

EP 2 378 688 B1

*FIG. 4*

EP 2 378 688 B1

BS

BS-AE1  BS-AE2  BS-AE3  BS-AE4

BS-AS

BS-TR

BS-CPU

TC

FC

BS-MEM

BS-PROG

*FIG. 5*

EP 2 378 688 B1

EP 2 378 688 B1

MS

MS-AE1  MS-AE2

MS-AS

MS-TR

MS-CPU

TC

FC

MS-MEM

MS-PROG

*FIG. 6*

# EP 2 378 688 B1

## REFERENCES CITED IN THE DESCRIPTION

### Patent documents cited in the description

- US 20100027456 A1

- US 20080013610 A1

### Non-patent literature cited in the description

- **ALCATEL-LUCENT et al.** Estimation of extended PMI feedback signaling required for user intra-cell and inter-cell coordination. *3GPP TSG-RAN WG1 Meeting #59bis*
- **ERICSSON.** A discussion on some technology components for LTE-Advanced. *3GPP TSG-RAN WG1 Meeting #53*

- **Y. LINDE ; A. BUZO ; R. GRAY.** An algorithm for vector quantizer design. *IEEE Transactions on Communications,* January 1980, vol. 28 (1), 84-95
- **S. P. LLOYD.** Least squares quantization in PCM. *Institute of Mathematical Statistics Meeting,* September 1957
- *Special Issue on Quantization of the IEEE Transaction on Information Theory,* 1957